# EUROPEAN PATENT SPECIFICATION

(11) **EP 2 867 581 B1**
(45) Date of publication and mention of the grant of the patent: **02.11.2016**
(21) Application number: 13739892.1
(22) Date of filing: 02.07.2013
(51) Int. Cl.: F21V 29/60, F21V 33/00, A21B 3/10, F24C 15/00, G02B 6/00, F21Y 115/10, F21W 131/307, F21V 8/00, F21W 131/409, F21K 99/00

(54) **LED LIGHTING DEVICE FOR LIGHTING AN OVEN CAVITY**
LED-BELEUCHTUNGSVORRICHTUNG ZUM BELEUCHTEN EINER OFENKAMMER
DISPOSITIF D'ÉCLAIRAGE À DEL PERMETTANT D'ÉCLAIRER UNE CAVITÉ DE FOUR

(30) Priority: 02.07.2012 IT TO20120586
(43) Date of publication of application: 06.05.2015
(73) Proprietor: Illinois Tool Works Inc., Glenview, IL 60025 (US)
(72) Inventor: BRUNO, Luca, Glenview, Illinois 60026 (US); PERUZZO, Massimo, Glenview, Illinois 60026 (US); TURETTA, Daniele, Glenview, Illinois 60026 (US)
(74) Representative: Marchitelli, Mauro
(86) International application number: PCT/US2013/049073
(87) International publication number: WO 2014/008265

(56) References cited:
- EP-A1- 2 014 974
- EP-A1- 2 119 968
- EP-A2- 2 251 588
- EP-A2- 2 267 358
- FR-A1- 2 944 092
- US-A1- 2004 041 984
- US-A1- 2009 316 385

## Description

### Field of the invention

The present invention broadly concerns domestic ovens and an LED lighting device for lighting the oven cavity.

### Description of the related art

The solutions most commonly used for lighting an oven cavity involve the use of conventional or halogen lamps. Indeed, these light sources are able to operate at high temperatures. The use of LED lighting devices to light an oven cavity is limited by the fact that LEDs do not work at very high temperatures.

Documents EP-A-1995522 and WO2007/033938 describe ovens fitted with LED lighting devices mounted inside a cooled door of the oven that, when in use, is filled with a cooling airflow. The airflow that cools the oven door is also used to cool the LED lighting devices. The drawback of these solutions is that when the door is opened the oven cavity is no longer illuminated.

Document EP-A-2119968 describes a domestic oven fitted with an LED lighting device that includes a plurality of LEDs associated with respective light guides that extend through the side walls of the oven. The LEDs are thermally connected to the outside walls of the oven. The oven walls act as a heat sink to keep the temperature of the LEDs relatively low. The drawback of this solution is that under certain conditions the oven walls may reach high temperatures, preventing them from effectively cooling the LED lighting devices.

The document EP 2 251 588 A2 represents the closest prior art and discloses an LED lighting device for oven cavities according to the preamble of claim 1.

### Scope and summary of the invention

The present invention is intended to provide an LED lighting device for lighting an oven cavity that overcomes the problems of the known solutions.

According to the present invention, this objective is achieved by a device having the features set out in claim 1.

The claims are an integral part of the teaching provided in relation to the invention.

### Short description of the drawings

The present invention is described in detail below with reference to the attached drawings, which are provided purely by way of non-limiting example, in which:
- Figure 1 is a perspective view of an oven fitted with an LED lighting device according to the present invention,
- Figure 2 is a magnified perspective view of the part indicated by the arrow II in figure 1,
- Figure 3 is a cross-section along the line II-II of figure 1,
- Figure 4 is a magnified section of the part indicated by the arrow IV in figure 3,
- Figure 5 is a plan view along the arrow V of figure 4 with a part removed to show the inside of the casing of the lighting device,
- Figure 6 is a cross-section along the line VI-VI of figure 5, and
- Figure 7 is a perspective view showing an auxiliary fan designed to be attached to the lighting device according to the invention.

### Description of embodiments of the invention

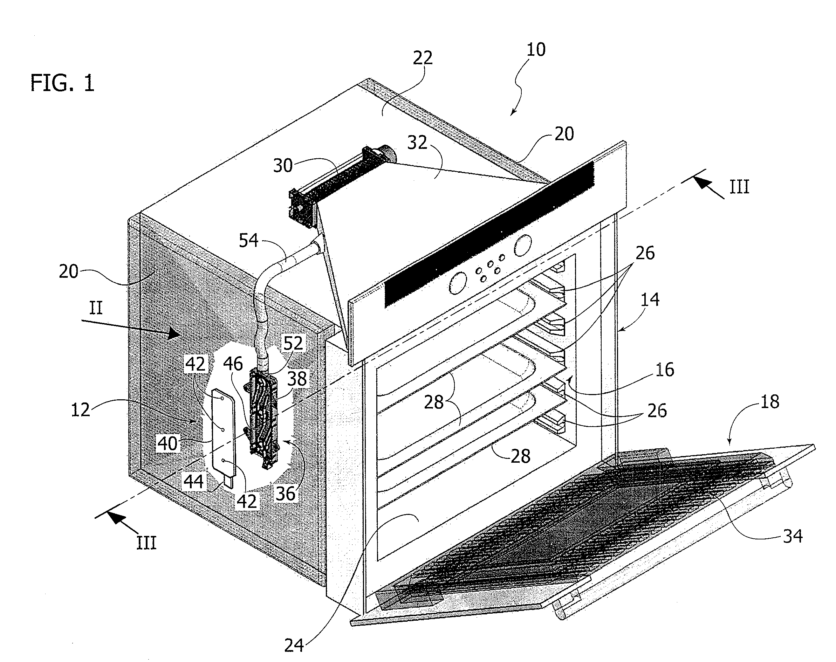

With reference to figures 1 to 3, reference sign 10 indicates a domestic oven fitted with an LED lighting device 12 according to the present invention. The oven 10 includes a casing 14 having a cavity 16 closed frontally by a door 18. The casing 14 includes two side walls 20, one top wall 22 and one bottom wall 24. The insides of the side walls 20 are fitted with guides 26 for holding trays 28.

The oven 10 may be provided with a system for cooling the door 18. The cooling system includes a fan 30 arranged on the top wall 22 and connected to an air conveyor 32 that conveys the cooling airflow generated by the fan 30 into a chamber 34 formed in the door 18.

The lighting device 12 according to the present invention is intended to be mounted on a side wall 20 of the oven 10. The oven 10 may be fitted with a single lighting device 12 or a lighting device 12 may be provided on each of the side walls 20. Two or more lighting devices 12 may also be provided on each of the side walls 20.

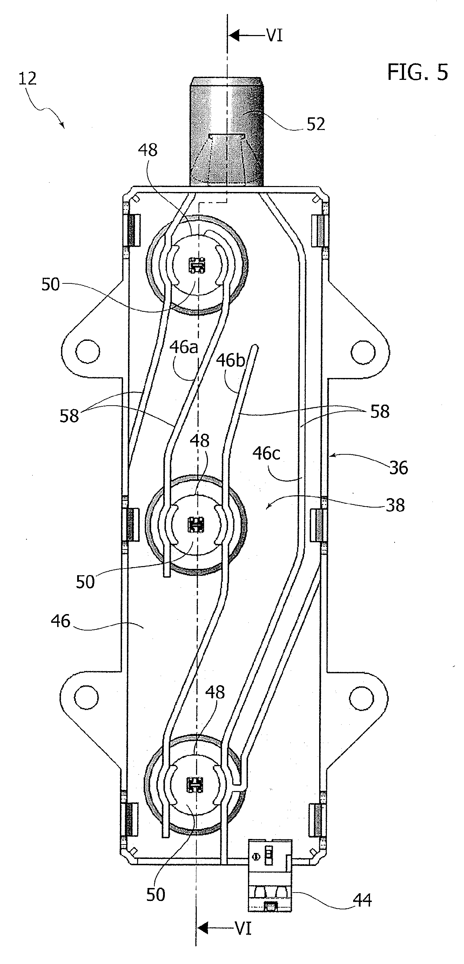

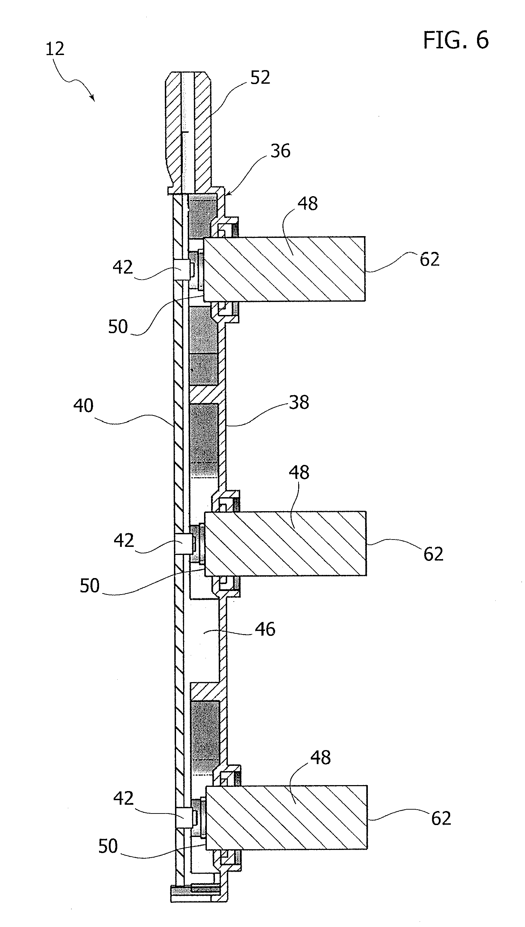

With reference to figures 5 and 6, the lighting device 12 includes a casing 36 designed to be attached to a side wall 20 of the oven 10. The casing 36 has a back wall 38 and an open side opposite the back wall 38.

The lighting device 12 includes a printed circuit board 40 bearing a plurality of LEDs 42. The printed circuit board 40 also bears the components of an electrical circuit for powering and controlling the LEDs 42. The printed circuit board 40 may also be fitted with an electrical connector 44 (figure 5) for connecting the lighting device 12 to the electrical circuit of the oven 10.

The printed circuit board 40 is attached to the open side of the casing 36 and is removed from the back wall 38 such as to form a gap 46 between the printed circuit board 40 and the back wall 38.

The back wall 38 has a plurality of light guides 48. Each light guide 48 is associated with a respective LED 42. The light guides 48 extend through respective holes in the back wall 38 and emerge outside the casing 36 orthogonally to the back wall 38. The light guides 48 are cylindrical and are made of material with high optical conductivity that can withstand high temperatures, such as glass or transparent plastic that can withstand high temperatures. Each light guide 48 has an internal frontal extremity 50 facing the respective LED 42. The LEDs 42 are positioned on the printed circuit board 40 in a longitudinal direction that corresponds to vertical in the position in which the casing 36 is intended to be mounted on the side wall 20 of the oven 10. The light guides 48 are spaced apart from one another to coincide with the LEDs 42.

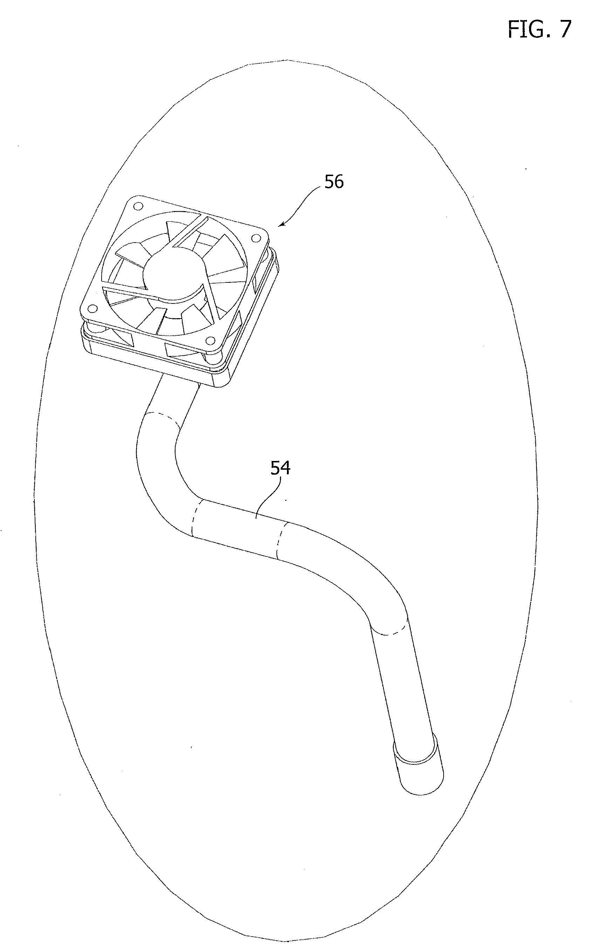

The lighting device 12 includes an air supply duct 52 able to supply a cooling airflow to the gap 46. The duct 52 is connected by a pipe 54 to the conveyor 32 of the cooling airflow of the door 18. If the oven 10 is not fitted with the door cooling system, the lighting device 12 is connected by a pipe 54 to an auxiliary fan 56 shown in figure 7.

As shown in particular in figure 5, the back wall 38 of the casing 36 has a plurality of ribs 58 extending from the inside of the wall 38 such as to divide the gap 46 into a series of channels 46a, 46b, 46c that conduct the cooling airflow from the duct 52 to the respective LEDs 42. This splits the airflow 52 into a series of mutually parallel airflows each directed to a respective LED 42.

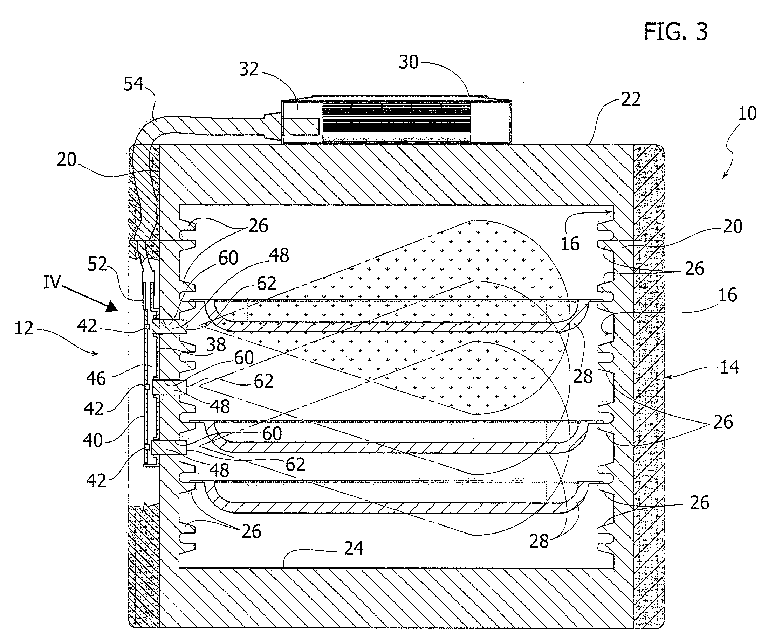

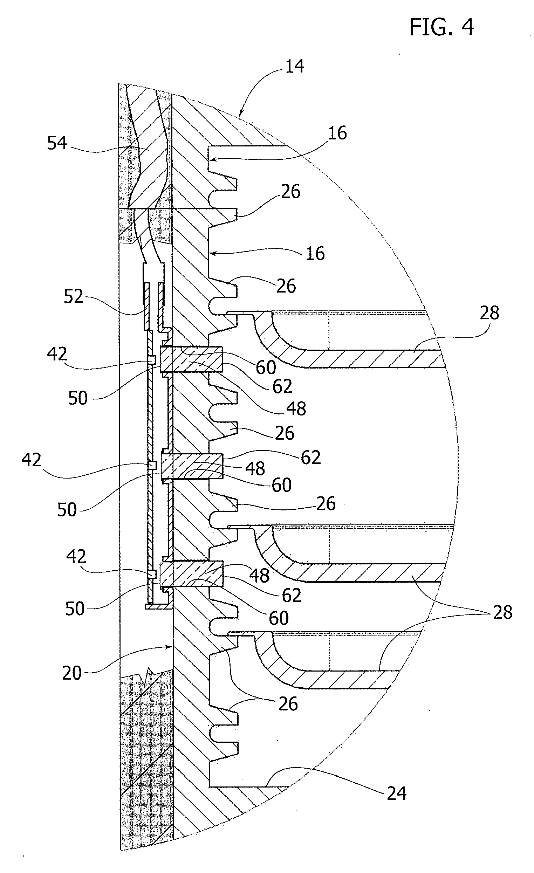

As shown in figures 3 and 4, the back wall 38 of the casing 36 is placed in contact with the outside of the side wall 20 of the oven 10. The light guides 48 are inserted into respective holes 60 formed in the respective side walls 20 of the oven 10. The distal extremities 62 of the light guides 48 face the inside of the cavity 16 of the oven 10. A layer of insulating material (not shown) may be placed between the back wall 38 of the casing 36 and the side wall 20 of the oven 10.

As shown in figure 3, when in operation the light guides 48 transmit the luminous fluxes generated by the LEDs 42 to the cavity 16 of the oven 10. The luminous fluxes from the light guides 48 are spaced apart from one another vertically and enable the entire cavity 16 to be illuminated even when the trays 28 are placed inside the cavity 16.

The LEDs 42 are thermally insulated from the side wall 20 of the oven 10 and are cooled by the cooling airflow generated by the fan 30 to cool the door 18 or by the auxiliary fan 56. The printed circuit board 40 bearing the LEDs 42 is thermally insulated from the side wall 20 by the gap 46 through which the cooling airflow flows. This solution therefore enables the LEDs 42 and the related electrical control and power circuit to be kept at a temperature below the critical operating threshold of the LEDs 42 and prevents the lighting device 12 from being damaged by overheating.

Naturally, notwithstanding the principle of the invention, the design details and embodiments may be varied significantly from the description and illustrations without thereby moving outside the scope of the invention as defined in the claims below.

## Claims

1. An LED lighting device for lighting the cavity (16) of an oven (10), comprising:
- a casing (36) having a back wall (38) and an open side opposite said back wall (38),
- a printed circuit board (40) bearing a plurality of LEDs (42) spaced apart from one another in a longitudinal direction, in which the printed circuit board (40) is attached to the open side of said casing (36) and is removed from said back wall (38) such as to form a gap (46) between said printed circuit board (40) and said back wall (38), and
- an air supply duct (52) for supplying a cooling airflow into said gap (46),
**characterised by**
- a plurality of light guides (48) that pass through respective holes in said back wall (38), in which the light guides (48) emerge outside said casing (36) orthogonally to said back wall (38) and have respective internal frontal extremities (50) facing the respective LEDs (42).

2. The device as claimed in claim 1, **characterized in that** said air supply duct (52) is linked to a pipe (54) designed to be connected to a conveyor (32) of a cooling airflow of the door (18) of the oven (10) or an auxiliary fan (56).

3. The device as claimed in claim 1, **characterized in that** said back wall (38) has a plurality of ribs (58) that divide said gap (46) into a plurality of channels (46a, 46b, 46c) that split the cooling airflow from said duct (52) into respective direct airflows to respective LEDs (42).

## Patentansprüche

1. LED-Beleuchtungseinrichtung zur Beleuchtung des Hohlraums (16) eines Ofens (10), umfassend:
- ein Gehäuse (36) mit einer Rückenwand (38) und einer der Rückenwand (38) gegenüberliegenden offenen Seite,
- eine Leiterplatte (40), die mehrere LEDs (42) trägt, die in einer Längsrichtung voneinander beabstandet sind, bei der die Leiterplatte (40) an der offenen Seite des Gehäuses (36) befestigt ist und von der Rückenwand (38) unter Ausbildung einer Lücke (46) zwischen der Leiterplatte (40) und der Rückenwand (38) entfernt ist,
- eine Luftzufuhrleitung (52) zum Führen eines kühlenden Luftstroms in die Lücke (46), **gekennzeichnet durch**
- mehrere Lichtleiter (48), die **durch** jeweilige Löcher in der Rückenwand (38) laufen, bei denen die Lichtleiter (48) außerhalb des Gehäuses (36) orthogonal zur Rückenwand (38) austreten und jeweilige innere Frontalextremitäten (50) aufweisen, die den jeweiligen LEDs (42) zugewandt sind.

2. Einrichtung nach Anspruch 1, **dadurch gekennzeichnet, dass** die Luftzufuhrleitung (52) mit einem Rohr (54) verbunden ist, das zur Verbindung mit einem Förderer (32) eines kühlenden Luftstroms der Tür (18) des Ofens (10) oder einem Zusatzlüfter (56) ausgeführt ist.

3. Einrichtung nach Anspruch 1, **dadurch gekennzeichnet, dass** die Rückenwand (38) mehrere Rippen (58) aufweist, die die Lücke (46) in mehrere Kanäle (46a, 46b, 46c) unterteilen, die den kühlenden Luftstrom aus der Leitung (52) in jeweilige Richtungsluftströme zu den jeweiligen LEDs (42) teilen.

## Revendications

1. Dispositif d'éclairage à DEL permettant d'éclairer la cavité (16) d'un four (10), comprenant :
- un boîtier (36) ayant une paroi arrière (38) et un côté ouvert opposé à ladite paroi arrière (38),
- une carte à circuits imprimés (40) portant une pluralité de DEL (42) espacées les unes des autres dans une direction longitudinale, la carte à circuits imprimés (40) étant fixée au côté ouvert dudit boîtier (36) et étant enlevée de ladite paroi arrière (38) pour former un espace (46) entre ladite carte à circuits imprimés (40) et ladite paroi arrière (38),
- un conduit d'alimentation en air (52) pour fournir un flux d'air de refroidissement dans ledit espace (46), **caractérisé par**
- une pluralité de guides de lumière (48) qui passent à travers des trous respectifs dans ladite paroi arrière (38), les guides de lumière (48) sortant dudit boîtier (36) perpendiculairement à ladite paroi arrière (38) et ayant des extrémités frontales internes respectives (50) en regard des DEL respectives (42).

2. Dispositif selon la revendication 1, **caractérisé en ce que** ledit conduit d'alimentation en air (52) est relié à un tube (54) conçu pour être connecté à un moyen de transport (32) d'un flux d'air de refroidissement de la porte (18) du four (10) ou à un ventilateur auxiliaire (56).

3. Dispositif selon la revendication 1, **caractérisé en ce que** ladite paroi arrière (38) présente une pluralité de nervures (58) qui divisent ledit espace (46) en une pluralité de canaux (46a, 46b, 46c) qui divisent le flux d'air de refroidissement provenant dudit conduit (52) en des flux d'air directs respectifs allant à des DEL respectives (42).
